# EUROPEAN PATENT APPLICATION

(11) **EP 2 540 782 A1**
(43) Date of publication of application: **02.01.2013**
(21) Application number: 12174528.5
(22) Date of filing: 29.06.2012
(51) Int. Cl.: C09D 11/00

(54) **Aqueous pigmented black inks having a unique dispersant mixture**

(30) Priority: 30.06.2011 US 201113174478
(71) Applicant: Lexmark International, Inc., Lexington, Kentucky 40550 (US)
(72) Inventor: Cai, Xiaorong, Lexington, KY Kentucky 40509 (US); Money, Elaine, Lexington, KY Kentucky 40513 (US)
(74) Representative: Birdi, Sandeep Singh

(57) **Abstract**

The present invention relates to a unique polymer dispersant mixture to be incorporated into a carbon black ink formulation. More particularly, the a polymeric dispersant mixture consists of a first polymer having moieties of methacrylic acid; poly (propylene glycol)-4-nonylphenyl ether acrylate; and poly (ethylene glycol)2,4,6-tris-(1-phenylethyl) phenyl ether methacrylate in combination with a second polymer selected from the group consisting of a copolymer of methacrylic acid and benzyl methacrylate and a terpolymer of styrene, alpha-methyl styrene and acrylic acid. Carbon black inkjet inks having this particular polymer dispersant mixture exhibit improved text quality when compared to carbon black inks not having this polymer dispersant mixture.

## Description

### Cross Reference To Related Applications

None.

### Microfiche Appendix

None.

### Government Rights in Patent

Not applicable.

### BACKGROUND OF THE INVENTION

### 1. Field of the Invention

The present invention relates to carbon black inkjet inks, and more particularly to a formulation for a unique polymer dispersant mixture to be added to a carbon black pigmented ink which provides the carbon black ink with superior text quality when compared to carbon back inks not having this particular dispersant mixture.

### 2. Description of the Related Art

Consumers expect black ink to possess certain print quality characteristics. These characteristics include superior dark black text quality, crisp edge acuity and good optical density. The black ink must also have highlighter and smear resistance. The black ink must have acceptable drying time and good adhesion when printed onto various types of media.

However, it is difficult to formulate a black ink meeting all these print quality characteristics simultaneously. Consequently many trade-offs arise when trying to formulate a black ink having most of these ink performance requirements demanded by the consumer. For example, increasing the black pigment load in the formulation improves the darkness of the text but it also has a negative impact on jetting and heater kogation. Adding particular type of surfactants into the ink formulation can speed up the penetration of ink on the media and improve the hi-liter and smear resistance but it also can result in reducing the darkness of the text and increasing the variation of the optical density on different types of media.

Polymer dispersants play an important role when added to pigment based inkjet inks. Adding the appropriate polymer dispersants into black pigmented inkjet inks can vastly improve ink stability, smear/scratch resistance on photo paper and high-liter/smear resistances on plain paper. This addition of polymer dispersants can also improve the print qualities of black pigmented ink, such as text sharpness and edge acuity. However, the existence of certain polymer dispersants increases the viscosity and dry time of the ink and decreases the wetability of the ink with respect to the print media. This results in poor jetting and higher media sensitivity when the black ink is printed onto different types of media. Therefore, it is difficult to select the appropriate mixture of polymer dispersants to be used in a black pigmented ink formulation without sacrificing the expected high print quality of carbon black inks.

Consequently, there is an obvious need to balance many competing factors when deciding exactly how to formulate a black ink which has all the desired above-mentioned print qualities. Another factor to consider when formulating a black pigmented ink is ink penetration speed. It is well known that pigmented inks contain particles. The ink penetration speed on paper directly impacts the optical density of the ink on the paper. Ink penetration speed depends on the properties of the ink and the properties of surface of the paper. Higher ink penetration speeds on paper result in less pigment cake being deposited on the surface of the paper. This causes a lowering of the optical density of the ink on the paper. A coating on the surface of a paper slows down the ink penetration speed and therefore increases the optical density of the ink. Unfortunately, the opposite is true for plain paper. Because of the lack of any coating on plain paper, the ink penetration speed is greater - resulting in a lower optical density for the ink. Text quality also varies on different types of media. Therefore, lowering the ink penetration and spreading speed on plain paper would improve the black ink's optical density and text quality on plain paper and reduce any paper to paper variation. The inventors have discovered that by incorporating a unique mixture of polymer dispersants into different type of carbon black ink formulations reduces the ink penetration and spreading speed on plain paper, therefore achieving an optimum design printing quality for black inks printed on plain paper.

### SUMMARY OF THE INVENTION

Exemplary embodiments of the present invention provide a pigmented inkjet ink comprised of a carbon black pigment dispersion and mixture of certain types polymers that are used as dispersants in pigmented ink. The carbon black pigment is self dispersed. The unique polymeric dispersant mixture is a combination of a first polymer having a low glass transition temperature and a second polymer having a high glass transition temperature. The first polymer having the low glass transition temperature is an acrylic polymer having moieties of methacrylic acid (MAA); poly (propylene glycol)-4-nonylphenyl ether acrylate (NPHPPG); and poly (ethylene glycol)2,4,6-tris-(1-phenylethyl) phenyl ether methacrylate (TRISA). The second polymer having a high glass transition temperature has an anionic hydrophilic monomer and a hydrophobic aromatic monomer. This second polymer is selected from the group consisting of a copolymer of methacrylic acid and benzyl methacrylate and a terpolymer of styrene, alpha-methyl styrene and acrylic acid. The polymeric dispersant mixture is about 0.5% to about 1.5% by weight of the inkjet ink.

The carbon black ink also includes a humectant selected from the group consisting of 1,3-propanediol, glycerol and triethylene glycol, and trimethyolpropane, and mixtures thereof. Also included in the ink formulation is a nonionic surfactant. The balance of the inkjet ink is water. Optionally, the inkjet ink may contain biocide. Carbon black inks formulated with this particular polymer dispersant mixture have superior print quality when compared to carbon black inks not having this particular polymer dispersant mixture. More particularly, it has been found that the addition of this unique polymer dispersant mixture into different carbon black ink formulations improves the text quality of the inks, regardless of the type of humectants and surfactants that are incorporated into the ink formulation. Additionally, variations in print quality found on different types of media are also reduced when using the carbon black ink having this particular dispersant mixture. The carbon black ink having the particular dispersant mixture of the present invention is also useful in inkjet printing systems using semi-permanent or permanent printheads.

### BRIEF DESCRIPTION OF THE DRAWINGS

The above-mentioned and other features and advantages of this invention and the manner of attaining them, will become more apparent and the invention will be better understood by reference to the following description of embodiments of the invention taken in conjunction with the accompanying drawings, wherein:

Fig. 1 is a print pattern of a carbon black inkjet ink.

Fig. 2 is a print pattern of another carbon black inkjet ink.

Fig. 3 is print pattern of a carbon black inkjet ink using the unique polymer dispersant mixture of the present invention.

Fig. 4 is a print pattern of a carbon black inkjet ink.

Fig. 5 is print pattern of a carbon black inkjet ink using the unique polymer dispersant mixture of the present invention.

Fig. 6 is a print pattern of a carbon black inkjet ink.

Fig. 7 is print pattern of an exemplary carbon black inkjet ink using the unique polymer dispersant mixture of the present invention.

The exemplification set out herein illustrates one embodiment of the invention and such exemplification is not to be construed as limiting the scope of the invention in any manner.

### DETAILED DESCRIPTION OF THE INVENTION

It has been found that adding a particular combination of polymer dispersants having different glass transition temperatures into different formulations of carbon black inkjet inks produces inks having superior print quality, including good optical density and edge crispness as well as minimal paper to paper variation. In various exemplary embodiments of the present invention, the inkjet ink is comprised of a carbon black pigment dispersion, a polymeric dispersant mixture including a combination of 2 polymers having different glass transition temperatures, a group of humectants, a surfactant and the balance water. Optionally the carbon black ink of may contain a biocide. The black pigment is self-dispersed.

Many self -dispersed carbon black pigment dispersions are commercially available. A particularly useful carbon black pigment dispersion is available from the Cabot Corporation under the trade name CaboJet ®400. The carbon black pigment dispersion should be between 3% by weight to 5% by weight of the total weight of the inkjet ink. Most preferably, the black pigment dispersion should be 4% by weight of the total weight of the inkjet ink.

In the preferred embodiment, the unique polymeric dispersant mixture of the present invention is a combination of a first polymer having a low glass transition temperature and a second polymer having a high glass transition temperature. It is preferable that the glass transition temperature of the first polymer measures between - 40°C and -10°C. It is preferable that the glass transition temperature of the second polymer measures between 85° C and 130°C. A polymer dispersant having a high glass transition temperature dries fast on porous paper, however it can form a polymer film which can become brittle and crack when the pigment cake on the surface of the paper is totally dry. On the other hand when the water evaporates and the pigment cake is dry, the polymer dispersant having a low glass transition temperature provides good binding strength. Without to be bound by theory, it is thought that the role of the high glass transition temperature polymer is like broken stone and the polymer with the low glass transition temperature is like a concrete structure. Although each of the two polymers separately cannot provide enough binding strength for the ink on the porous paper, it is the combination of both polymers that provide good binding for the pigment cake on surface of the porous paper, thereby resulting in a sharper text.

The first polymer to be included into the unique polymer dispersant mixture of the present invention is an acrylic polymer having moieties of methacrylic acid (MAA); poly (propylene glycol)-4-nonylphenyl ether acrylate (NPHPPG); and poly (ethylene glycol)2,4,6-tris-(1-phenylethyl) phenyl ether methacrylate (TRISA). In exemplary embodiments, the molar ratio of MAA:NPHPPG:TRISTA ranges from about 4:1:1 to about 18:1:1. In one embodiment, the molar ratio of MAA:NPHPPG:TRISTA is 15:1:1. In the most preferred embodiment, the molar range of MAA:NPHPPG:TRISTA is 6.2:1:1. This first polymer and its polymerization is more particularly described in US 6,652,634 assigned to the assignee of the present invention. This particular first polymer has a desired low glass transition temperature of approximately -35°C.

The second polymer to be included into the unique polymer dispersant mixture of the present invention is a graft polymer having both an anionic hydrophilic monomer and a hydrophobic aromatic monomer. The hydrophilic monomer can be any carboxylic acid containing vinyl, acrylic or methacrylic molecule which is typically used in radical polymerization. Examples are methacrylic acid or acrylic acid. The hydrophobic monomer can be any phenyl containing monomer of the type including acrylic, methacrylic, vinyl or styrene that is typically used in radical polymerization. One useful second polymer is a copolymer manufactured by Lexmark International ®using methacrylic acid for the hydrophilic component and benzyl methacrylate for the hydrophobic component. It has a relatively high glass transition of approximately 90°C. The molar ratio of the methacrylic acid to the benzyl methacrylate is approximately 1:1. The molecular weight of this polymer is approximately 9000 based on gel permeation chromatography (GPC) and its acid number is approximately 195.5. The manufacture of this polymer is as follows: 500mL batch size; 45.0g methacrylic acid, 95.55g benzyl methacrylate and 9.0g dodecanethiol are weighed into a 500mL three neck round bottom flask. Add 200mL of isopropyl alcohol to the flask as well. Stir the mixture vigorously. Evacuate the system and purge with nitrogen. Maintain nitrogen purge throughout. Heat to 75C and then add 0.45g of V-601 azo initiator. Maintain stirring and heat for 8 hours. After 8 hour hold drain the flask into a drying tray and dry off the isopropyl alcohol at 85C. Collect the solid polymer and mix it into water at 15% solids. Add enough KOH or NaOH to give a final solution pH of 7.5 to 8.0.

Another useful second polymer is a terpolymer using styrene and alpha-methyl styrene in the hydrophobic component and acrylic acid in the hydrophilic component of the terpolymer. This terpolymer is sold by BASF Company under the trade name Joncryl® HPD 471. It has a relatively high glass transition of approximately 129°C, a molecular weight of approximately 17,250 and an acid number of 214.

In an embodiment of the present invention, the total amount of polymer dispersant mixture used in the carbon black ink is between .5% by weight to 1.0% by weight of the carbon black inkjet ink. Most preferably the polymer dispersant mixture is about .82% by weight of the black inkjet ink. The amount of the first polymer to be included in the ink formulation ranges from approximately .4% to approximately .7% by weight of the inkjet ink formulation, most preferably .54% by weight of the inkjet ink formulation. The amount of the second polymer to be included in the ink formulation ranges from approximately .10 % to approximately .30% by weight of the inkjet ink formulation, most preferably, .28% by weight of the inkjet ink formulation.

The nonionic surfactants useful in the current invention can be selected from a group including an ethoxylated nonionic fluorosurfactant with structure of alpha-fluoro-omega-(2-hydroxyethyl) poly (difluoromethylene) with polyethylene glycol, such as Zonyl ®FSO, Capstone® FS-31, Capstone® FS-34, and Capstone® FS-35 from DuPont, or Novec ®FC-4434 from 3M Company; a polyalkylene oxide polysiloxanes having a dimethyl polysiloxane hydrophobic moiety and one or more hydrophilic polyalkylene side chain with the preferable molecular weight about 4000, such as Silwet® L7600 from Witco Corp.; and an ethoxylated alkyl phenol and derivations with between 30 moles and 70 moles of ethylene oxide, such as Triton® X-305, X-405 and X-705 from Dow Chemical Company, Iconol ®OP-30, Iconol OP-40 from BASF Company.

It is preferred that the nonionic surfactant be of about 0.1% to about 1.0% by weight of the inkjet ink. In a more preferred embodiment, the nonionic surfactant is about 0.2% to about 0.8% by weight of the inkjet ink. The most preferred is .5% by weight of the inkjet ink. The nonionic surfactant assists in wetting, surface activation and bubble control of the inkjet ink.

In the exemplary embodiments, a humectant is used in combination with the above described surfactant and polymer dispersant mixture of the present invention to produce a carbon black ink having superior print quality. The humectant is selected from the group consisting of 1,3 propanediol, glycerol, triethylene glycol, and trimethylopropane and mixtures thereof. Some useful humectants include 1)a mixture of glycerol, triethylene glycol and trimethylolpropane; 2) a mixture of glycerol, triethylene glycol, and 1,3 propanediol; and 3) a mixture of glycerol and trimethylolpropane. The humectant is between approximately 15% to approximately 25% by weight of the black inkjet ink. The most preferred humectants are those included in group 2. The glycerol is about 10% by weight of the inkjet ink; the 1,3 propanediol is about 5% by weight of the inkjet ink; and the triethylene glycol is about 5% by weight of the inkjet ink.

The carbon black inkjet inks were manufactured according to the following general procedure: Weigh the balance of the water in a beaker then place the beaker on top of a magnetic mixer. Weigh and add each ingredient in the following order while keeping the mixer on - humectants, dispersant (a mixture of polymer A and polymer B), surfactant, biocide and carbon black pigment dispersion. Wait at least 5 minutes before adding each ingredient. Keep the mixer on for another 10 minutes after the addition of all the ingredients is complete. Filter the ink using 5 microns and 1.2 micron filters. Nine different carbon black inks were formulated following this method and each of their respective ingredients and amounts are listed in Table 1 below. The nine inks were grouped into 3 different ink groups: sets 'A', 'B', and 'C'. Ink Set A has the same humectant and surfactant package. Ink set B has the same humectant and surfactant package. Ink set C has the same humectant and surfactant package.

**TABLE 1**

| **Ink Set** | **Formulation** | **Humectants** | **Polymer A** | **Polymer B** | **Surfactant** | **Pigment** |
|---|---|---|---|---|---|---|
| A | Ink 1 | 9% Glycerol, 1% Triethylene glycol, 5% Trmiethylolpropane | N/A | 0.8% Lexmark 1329A dispersant | 0.01 % Zonyl FSO | 4% Carbon Black |
| A | Ink 2 | 9% Glycerol, 1% Triethylene glycol, 5% Trmiethylolpropane | 0.8% Joncryl HDP671 | N/A | 0.01%Zonyl FSO | 4% Carbon Black |
| A | Ink 3 | 9% Glycerol, 1% Triethylene glycol, 5% Trmiethylolpropane | 0.28% Joncryl HDP671 | 0.54% Lexmark 1329A dispersant | 0.01% Zonyl FSO | 4% Carbon Black |
| B | Ink 4 | 10% Glycerol, 5% Triethylene glycol, 5% 1,3 propanediol | N/A | 0.8% Lexmark EA479 dispersant | 0.5% Silwet L7600 | 4% Carbon Black |
| B | Ink 5 | 10% Glycerol, 5% Triethylene glycol, 5% 1,3 propanediol | 0.8% Lexmark EA479 dispersant | N/A | 0.5% Silwet L7600 | 4% Carbon Black |
| B | Ink 6 | 10% Glycerol, 5% Triethylene glycol, 5% 1,3 propanediol | 0.54% Lexmark EA479 dispersant | 0.28% Lexmark EA479 dispersant | 0.5% Silwet L7600 | 4% Carbon Black |
| C | Ink 7 | 10% Glycerol, 5% Trimethylolpropane | N/A | 0.8% Lexmark 1329 A dispersant | 0.2% Triton X-405 | 4% Carbon Black |
| C | Ink 8 | 10% Glycerol, 5% Trimethylolpropane | 0.8% Joncryl HDP671 | N/A | 0.2% Triton X-405 | 4% Carbon Black |
| C | Ink 9 | 10% Glycerol, 5% Trimethylolpropane | 0.14% Joncryl HDP671 | 0.62% Lexmark 1329 A dispersant | 0.2% Triton X-405 | 4% Carbon Black |

The nine ink formulations listed in Table 1 were tested in a Lexmark® Intuition® S505 printer. The printing quality was evaluated based on idle time in the environment controlled room at 60°F and 8% humidity. The text score is performed under an ambient environment. The text score is a text metrics consisting of 6 elements including image blur, edge raggedness, contrast, line contrast, horizontal resolution and vertical resolution. The lower the text score, the better the text quality. In current examples, the text score are the average of text scores from three papers including Hammermill® Laser Print, Printwork® Multi-purpose, and, Hammermill® Tidal Multi-Purpose. Idle time is defined as how many seconds the printhead has been in idle and still can be jetted without missing or misdirected dots. The lower the time the better the idle time score. The results of the optical density (OD) are based on the average of 6 papers including: Hammermill® Laser Print, Printwork® Multi-purpose, Xerox® 4200, Hammermill® Tidal Multi-Purpose, Hewlitt-Packard® Multi-Purpose and Hammermill® Copy Plus. A higher optical density number is desired. Paper to paper variation of optical density and text score is calculated based on the standard deviation of all the papers tested. Idle time, optical density and text score results directly correlate to the quality of any black ink. These above described test results performed on the 9 inks listed in Table 1 are shown in Table 2:

**TABLE2**

| **Formulation** | **Idle time (sec)** | **OD** | **paper to paper variation of OD** | **Text Score** | **paper to paper variation of text** |
|---|---|---|---|---|---|
| Ink 1 | 1.8 | 1.44 | 0.05 | 2.1 | 0.32 |
| Ink 2 | 1.1 | 1.45 | 0.08 | 2.3 | 0.56 |
| Ink 3 | 1.6 | 1.45 | 0.03 | 1.7 | 0.28 |
| Ink 4 | 2.1 | 1.43 | 0.06 | 2.2 | 0.45 |
| Ink 5 | 1.5 | 1.44 | 0.11 | 2.6 | 0.63 |
| Ink 6 | 2.0 | 1.44 | 0.05 | 1.9 | 0.42 |
| Ink 7 | 2.1 | 1.44 | 0.07 | 2.1 | 0.45 |
| Ink 8 | 1.3 | 1.45 | 0.10 | 2.5 | 0.52 |
| Ink 9 | 1.8 | 1.44 | 0.05 | 1.8 | 0.38 |

As illustrated with the above results in Table 2, the inks numbered 3, 6 and 9 having the polymer dispersant mixture of the present invention have superior text quality, optical density and media sensitivity when compared to those inks in their respective inks sets having the same ink formulation but lacking the desired polymer dispersant mixture.

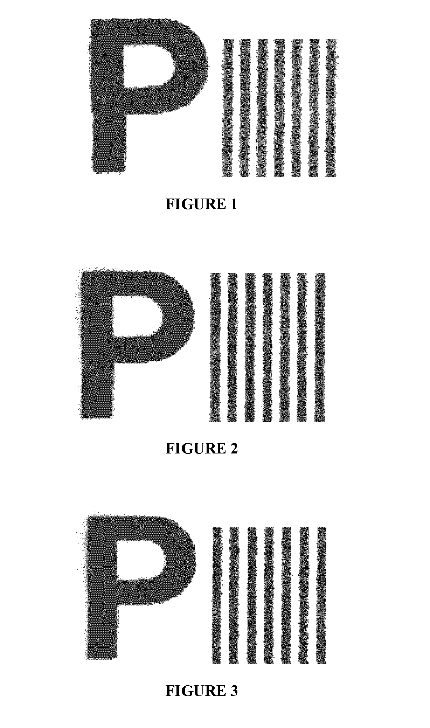

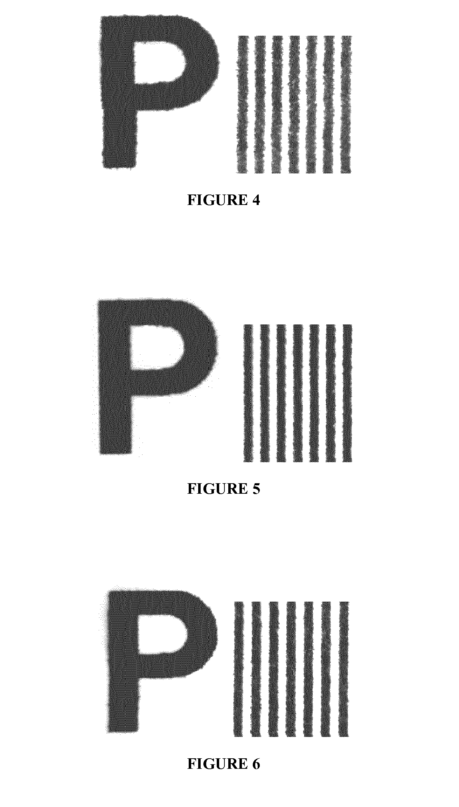

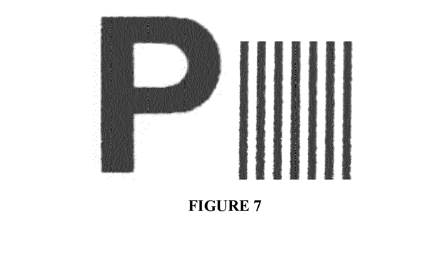

Figure 1 illustrates the printed pattern of the ink formulation listed as Ink 1 in Table 1. Figure 2 illustrates a printed pattern of the ink formulation listed as ink number 2 in Table 1. Figure 3 illustrates the printed pattern of the ink formulation listed as Ink 3 in Table 1 having the desired polymer dispersant mixture of the present invention. It can be seen from a comparison of Figures 1, 2 and 3 that the print pattern in Figure 3 has much crisper and more defined edges than the print patterns in Figures 1 and 2. Figure 4 illustrates the printed pattern of the ink formulation listed as Ink 4 in Table 1. Figure 5 illustrates the printed pattern of the ink formulation listed as Ink 6 in Table 1 having the desired polymer dispersant mixture of the present invention. Figure 6 illustrates the printed pattern of the ink formulation listed as Ink 7 in Table 1. Figure 7 illustrates the printed pattern of the ink formulation listed as Ink 9 in Table 1 having the desired polymer dispersant mixture of the present invention. The same result is observed when comparing the print patterns of Figure 4 to Figure 5 and Figure 6 to Figure 7. It can be seen that the addition of the specific polymer dispersant mixture of the present invention improves the print quality of many different types of carbon black ink formulations.

As exemplified in the above results, different formulations of carbon black inkjet inks having the unique polymer dispersant mixture of the present invention exhibit better text quality and optical density when compared to similar carbon black inks not having the specific polymer dispersant mixture of the present invention.

While this invention has been described with respect to at least one embodiment, the present invention can be further modified within the spirit and scope of this disclosure. This application is therefore intended to cover any variations, uses or adaptations of the invention using its general principles. Further, this application is intended to cover such departures from the present disclosure as come within known or customary practice in the art to which this invention pertains and which fall within the limits of the appended claims.

## Claims

1. A polymer dispersant mixture to be added to a carbon black ink formulation comprising a first polymer having moieties of methacrylic acid; poly (propylene glycol)-4-nonylphenyl ether acrylate; and poly (ethylene glycol)2,4,6-tris-(1-phenylethyl) phenyl ether methacrylate in combination with a second polymer selected from the group consisting of a copolymer of methacrylic acid and benzyl methacrylate and a terpolymer of styrene, alpha-methyl styrene and acrylic acid wherein the carbon black ink formulation having the polymer dispersant mixture exhibits improved text quality.

2. The polymer dispersant mixture of claim 1, wherein a molar ratio of methacrylic acid: poly (propylene glycol)-4-nonylphenyl ether acrylate: poly (ethylene glycol)2,4,6-tris-(1-phenylethyl) phenyl ether methacrylate in the first polymer is 6.2:1:1.

3. The polymer dispersant mixture of claim 1, wherein the second polymer is a copolymer of methacrylic acid and benzyl methacrylate.

4. The polymer dispersant mixture of claim 1, wherein the second polymer is a terpolymer of styrene, alpha-methyl styrene and acrylic acid.

5. An inkjet ink comprising:
a self -dispersed carbon black pigment dispersion being about 4% by weight of the inkjet ink;
a polymeric dispersant mixture consisting of a first polymer having moieties of methacrylic acid; poly (propylene glycol)-4-nonylphenyl ether acrylate; and poly (ethylene glycol)2,4,6-tris-(1-phenylethyl) phenyl ether methacrylate in combination with a second polymer selected from the group consisting of a copolymer of methacrylic acid and benzyl methacrylate and a terpolymer of styrene, alpha-methyl styrene and acrylic acid wherein the first polymer has a low glass transition temperature and the second polymer has a high glass transition temperature and the polymeric dispersant mixture is about 0.5% to about 1.5% by weight of the inkjet ink;
a humectant selected from the group consisting of 1,3-propanediol, triethylolpropane, glycerol and tri-ethylene glycol and mixtures thereof, wherein the humectant is about 15% to about 25% by weight on the inkjet ink;
a nonionic surfactant being about 0.1% to about 0.8% by weight of the inkjet ink: and
the balance water, wherein said inkjet ink exhibits good text quality.

6. The inkjet ink according to claim 5, wherein a molar ratio of methacrylic acid: poly (propylene glycol)-4-nonylphenyl ether acrylate: poly (ethylene glycol)2,4,6-tris-(1-phenylethyl) phenyl ether methacrylate in the first polymer ranges from about 4:1:1 to about 18:1:1.

7. The inkjet ink according to claim 6, wherein a molar ratio of methacrylic acid: poly (propylene glycol)-4-nonylphenyl ether acrylate: poly (ethylene glycol)2,4,6-tris-(1-phenylethyl) phenyl ether methacrylate in the first polymer is 6.2:1:1.

8. The inkjet ink of claim 5, wherein the second polymer is a copolymer of methacrylic acid and benzyl methacrylate.

9. The inkjet ink of claim 5, wherein the second polymer is a terpolymer of styrene, alpha-methyl styrene and acrylic acid.

10. The inkjet ink of claim 5, wherein the glass transition temperature of the first polymer is approximately 35°C.

11. The inkjet ink of claim 5, wherein the glass transition temperature of the second polymer ranges from approximately 90°C to approximately 130°C.

12. The inkjet ink of claim 5, wherein the humectant comprises a mixture of 1,3-propanediol, glycerol and triethylene glycol.

13. The inkjet ink of claim 5, wherein the humectant comprises a mixture of glycerol, triethylene glycol and trimethylolpropane.

14. The inkjet ink of claim 5, wherein the humectant comprises a mixture of glycerol and trimethylopropane.

15. The inkjet ink according to claim 5, wherein the nonionic surfactant is an ethoxylated alkyl phenol having between 30 moles and 70 moles of ethylene oxide.

16. The inkjet ink according to claim 5, wherein the nonionic surfactant is a polysiloxane.

17. The inkjet ink according to claim 5, further comprising a biocide.

18. A carbon black pigment inkjet ink comprising:
a self dispersed carbon black pigment dispersion being about 4% by weight of the inkjet ink;
a polymeric dispersant mixture consisting of a first polymer having moieties of methacrylic acid; poly (propylene glycol)-4-nonylphenyl ether acrylate; and poly (ethylene glycol)2,4,6-tris-(1-phenylethyl) phenyl ether methacrylate in combination with a second copolymer consisting methacrylic acid and benzyl methacrylate, the polymeric dispersant mixture being about 0.8% by weight of the inkjet ink;
a humectant group consisting of 1,3-propanediol, glycerol and tri-ethylene glycol, the humectant group being about 20% by weight on the inkjet ink; and
a nonionic polysiloxane surfactant being about 0.5% by weight of the inkjet ink, whereby said carbon black pigment inkjet ink exhibits good text quality.
